# EUROPÄISCHE PATENTSCHRIFT

(11) **EP 2 144 083 B1**
(45) Veröffentlichungstag und Bekanntmachung des Hinweises auf die Patenterteilung: **16.11.2011**
(21) Anmeldenummer: 09160130.2
(22) Anmeldetag: 13.05.2009
(51) Int. Cl.: G01S 7/526, G01S 15/93

(54) **Verfahren zur dynamischen Ermittlung des Rauschlevels**
Method for dynamic calculation of noise levels
Procédé de détermination dynamique du niveau de bruit

(30) Priorität: 07.07.2008 DE 102008040219
(43) Veröffentlichungstag der Anmeldung: 13.01.2010
(73) Patentinhaber: Robert Bosch GmbH, 70442 Stuttgart (DE)
(72) Erfinder: Frank, Michael, 75015 Bretten (DE); Lee, Wei-Chia, 71229 Leonberg (DE); Richter, Karl-Heinz, 71263 Weil Der Stadt (DE)

(56) Entgegenhaltungen:
- WO-A1-2008/116753
- DE-A1- 19 645 339
- DE-A1-102004 006 015
- DE-A1-102005 040 777
- US-A- 5 319 972

## Beschreibung

Die Erfindung betrifft ein Verfahren nach dem Oberbegriff des Anspruch 1 zur dynamischen Anpassung des Schwellwertes am Signaleingang eines Sensors zur Abstandsmessung mittels eines Echoverfahrens. Die Erfindung betrifft zudem einen Sensor, insbesondere einen Ultraschallsensor, als Teil eines Fahrerassistenzsystems zur Umsetzung des Verfahrens.

### Stand der Technik

Solche insbesondere ultraschallbasierten Fahrerassistenzsysteme zur Erfassung des Umfeldes nutzen zur Abstandsmessung bekanntermaßen ein Puls - Echo Verfahren, bei dem aus der Laufzeit des Signals zwischen dem Sendezeitpunkt und dem Empfangszeitpunkt ein Abstand zwischen dem Sensor und dem das Echo verursachten Objekt berechnet wird. Derartige Messungen führen zu Daten, die als Grundlage in Systeme zur Einparkunterstützung, zur Erkennung toter Winkel, zur Schätzung des Fahrschlauches in engen Strassen, zur Erkennung einer drohenden Kollision und/oder zur Längsregelung dienen. Bekannt ist auch, zur Korrektur der Messungen Schwellwerte, insbesondere Schwellwertkennlinien, vorzugeben.

So ist aus der DE 19645339 A1 ein Verfahren zur Abstandsmessung bekannt, bei dem im Sensor eine statische Schwellwertkennlinie durch eine Anzahl von Schwellwert-Stützstellen definiert wird. Bei der Messung wird die Amplitude des empfangenen Signals mittels eines Komparators mit dem jeweiligen Schwellwert verglichen. Erst wenn die Amplitude den Schwellwert übersteigt, meldet der Sensor das Empfangssignal an eine Auswerteeinheit.

Durch Vorgabe der Schwellwerte kann die Charakteristik des Systems eingestellt werden. So können die Systeme durch Vorgabe hoher Schwellwerte auf die Erkennung respektive die Unterdrückung von Störquellen eingestellt werden. Hohe Schwellwerte gehen jedoch mit einer geringen Empfindlichkeit und Reichweite der Systeme einher. Andererseits kann durch Vorgabe niedriger, möglichst nahe an der Rauschgrenze liegender Schwellwerte eine hohe Sensitivität der Sensoren und eine möglichst große Reichweite gewährleistet werden. Hohe Reichweiten ergeben sich, wenn auch am Ende des Messzyklus noch reflektierte Echos gemessen werden können. Da die Amplitude proportional zur Signallaufzeit abnimmt, sind die Amplituden der reflektieren Echos am Ende des Messzyklus besonders klein. Allerdings werden mit der Annahme niedriger Schwellwerte keine Störquellen unterdrückt.

Um derartige Systeme für möglichst große Abstände einsetzen zu können, ist die Kenntnis des Signalrauschens wesentlich, da mit dieser Kenntnis eine möglichst angepasste Schwellwertkennlinie vorgegeben werden kann. Dabei ist für die Bestimmung des Rauschlevels eine Unterscheidung zwischen einem Nutzsignal, also einem reflektierten Echo, und dem Rauschen notwendig. Um das Rauschen zu charakterisieren, bestimmen bekannte Verfahren eine Einhüllende durch Demodulation des Signals und nutzen die daraus abzuleitenden Parameter für weitere Verarbeitungsschritte. Dieses Vorgehen geht mit einer erhöhten Komplexität und entsprechenden Kosten einher.

Auch ist zu beachten, dass für die Höhe des Rauschlevels das dynamischen Umfeld, in dem die Sensoren arbeiten, eine Rolle spielt. So hängen die Amplituden der reflektierten Echos bekanntermaßen insbesondere von der Lufttemperatur und der Feuchtigkeit ab. Auch werden die Sensoren beispielsweise bei Regen durch Gischt, durch Nebel, durch Rollgeräusche und durch Luftströmungen bei höheren Geschwindigkeiten gestört. Diese Störungen erzeugen nicht existierende aber vom Sensor wahrgenommene "Geisterobjekte", die als Objekte erkannt werden und zum Fehlverhalten des Systems führen. Um diese Art von Störungen auszublenden, muss eine Anpassung der Schwelle an die jeweilige Rauschsituation vorgenommen werden.

Aus DE 10 2004 006 015 A1 ist ein Verfahren zur Bestimmung und Regelung einer adaptiven Schwelle beschrieben, wobei am Ende des Pulswiederholintervalls eine Störpegelprobe entnommen und daraus der Schwellwert bestimmt wird.

### Aufgabe und Vorteile der Erfindung

Die Aufgabe der Erfindung besteht darin, ein Verfahren zur dynamischen Anpassung der Schwellwertkennlinie vorzuschlagen, das sich mit geringem konstruktiven Aufwand und geringen Kosten umsetzen lässt und mit dem bei großer Dynamik eine hohe Sensitivität des Sensors und damit eine möglichst große Reichweite erzielt wird.

Diese Aufgabe wird durch das Verfahren mit den kennzeichnenden Merkmalen des Anspruch 1 und den Ultraschallsensor mit den kennzeichnenden Merkmalen des Anspruch 10 gelöst. In den jeweiligen Unteransprüchen sind vorteilhafte Ausführungsformen genannt.

Die wesentliche Grundidee des erfindungsgemäßen Verfahrens liegt darin, zunächst innerhalb eines Messzyklus, also innerhalb der Zeitspanne zwischen dem Aussenden des Signals und dem Empfangen des Echos, ein Zeitintervall, nachfolgend auch "Rauschintervall", zu definieren, in dem möglichst sichergestellt ist, dass kein von einem massiven Gegenstand herrührendes Echo empfangen wird. Innerhalb dieses Intervalls wird durch "Abtasten" des Rauschlevels, also durch sukzessives Ändern des Schwellwertes und durch den Vergleich von aktuellem Schwellwert und aktuellem Eingangs-Rauschsignal, eine Folge von Schwellwerten aufgenommen, die der zeitlichen Änderung des Rauschlevels in gewisser Weise folgen. Aus den Messungen, die zumindest zum Teil registriert werden, wird eine Schwellwertkennlinie bestimmt, die der Messung innerhalb des aktuellen Messzyklus und/oder für kommende Messzyklen zugrunde gelegt werden kann.

Das Abtasten geschieht erfindungsgemäß dadurch, dass der Schwellwert innerhalb des Zeitintervalls in definierten Schritten verändert wird und dabei das Eingangs-Rauschsignal im Verhältnis zum aktuellen Schwellwert überwacht wird. Dabei wird zur Annährung an den Rauschlevel der Schwellwert gesenkt, solange das Eingangs-Rauschsignal unterhalb des aktuellen Schwellwertes liegt. Andererseits wird der Schwellwert dem Rauschlevel "nacheilend" erhöht, solange das Eingangs-Rauschsignal oberhalb des aktuellen Schwellwertes liegt. Innerhalb des Zeitintervalls werden zumindest einige der Schwellwertstufen registriert. Aus den registrierten Schwellwerten kann dann eine Schwellwertlinie ermittelt werden.

Vorteilhafterweise wird der Schwellwert für den Komparator kontinuierlich in Sägezahnform, respektive in Form von gleichlangen Treppenstufen, jeweils definierter Höhe gesenkt respektive erhöht.

Da eine solchermaßen ermittelte Schwellwertkennlinie nahe am tatsächlichen Rauschlevel liegt, kann diese der Abstandsmessung mittels eines Echoverfahrens zumindest innerhalb des aktuellen Messzyklus aber auch für folgende Messzyklen zugrunde gelegt werden. Als Ergebnis der erfindungsgemäßen Vorgehensweise ergibt sich eine Schwellwertkennlinie, die im Idealfall oberhalb des "kontinuierlichen" Anteiles des Rauschuntergrundes und unterhalb kurzzeitiger hochfrequenter Spitzen liegt. Bei der späteren Signalauswertung können diese hochfrequenten Spitzen mittels Filterelektronik herausgefiltert werden.

Vorteilhafterweise wird die Abtastung des Rauschlevels innerhalb eines Rauschintervalls vorgenommen, das an den Anfang und/oder an das Ende innerhalb des Messzyklus gelegt wird. So kann sichergestellt werden, dass keine störenden Echos auftreten, die beispielsweise von einer nahe am Sensor befindlichen Anhängekupplung herrühren. Falls sie auftreten sind solche Echos aufgrund der hohen Amplitude jedoch eindeutig zu erkennen. Es bietet sich beispielsweise an, das Rauschintervall im Zeitraum zwischen 1.5 ms und 3.5 ms nach dem Sendetrigger vorzusehen. Wenn das Rauschintervall an das Ende des Messzyklus gelegt wird, kann die daraus ermittelte Schwellwertlinie erst für den nächsten Messzyklus verwendet werden.

Besonders vorteilhaft da kostensenkend ist es, wenn die erfindungsgemäße Verfahrensweise sich der ehedem in den Sensoren befindlichen Elemente, insbesondere des Komparators und der monostabilen Kippschaltung ("Monoflop") bedient. Mit diesen Sensoren kann in jedem Messzyklus gleichzeitig die erfindungsgemäße Vermessung des Rauschens und die Abstandsmessung zu Objekten bewerkstelligt werden. Diese erfindungsgemäßen Verfahrensweise ist daher besonders vorteilhaft, da sie sich allein mit den Komponenten eines üblicherweise einzusetzenden Sensors durchführen lässt.

Vorteilhafterweise wird auch eine bistabile Kippschaltung, insbesondere der Monoflop des Sensors, für die Messung eingesetzt, um den Zustand ansteigender respektiver fallender Schwellwerte zu markieren. So kann der Signalausgang der bistabilen Kippschaltung verändert werden, wenn sich die Richtung der veränderlichen Schwellwerte ändert. Eine ansteigende Folge, die bedeutet, dass das Eingangs-Rauschsignal den aktuellen Schwellwert übersteigt, kann beispielsweise mit dem Hochsetzen des Monoflop Ausgangs einher gehen. Vorteilhaft ist es, wenn die Folge der Schwellwerte nur registriert wird, wenn der Monoflop einen der Zustände eingenommen hat. Insbesondere werden nur ansteigende Schwellwerte bei hoch gesetztem Monoflop Ausgang registriert. Durch ein solches "selektives" Vorgehen kann sichergestellt werden, dass nur für die Auswertung sinnvolle Schwellwerte registriert werden. Zudem ist der zur Verfügung stehende Speicherplatz verhältnismäßig gering, so dass ein eine Reduzierung zu speichernder Schwellwerte auch aus diesem Grund von Vorteil ist.

Die Schwellwerte, bei denen der Komparator eine Überschreitung des Rauschsignals registriert hat, werden gespeichert. Nach der Messung über das Rauschintervall wird aus den gespeicherten Werten die Schwellwertkennlinie beispielsweise durch eine Mittelung ermittelt. Eine solche Messung kann innerhalb eines Messintervalls stattfinden, wobei die ermittelte Schwellwertkennlinie dann für eine Vielzahl weiterer Messintervalle genutzt wird. Eine solche Messung wird jedoch vorteilhafterweise individuell für jedes Messintervall durchgeführt.

Der Vorteil des erfindungsgemäßen Verfahrens gegenüber bisherigen Vorgehensweisen ist, dass es sich keiner komplizierten Formalismen bedienen muss, insbesondere keine Einhüllende durch Demodulation ermitteln muss. Dadurch kann Aufwand eingespart und die Komplexität im Sensor erheblich reduziert werden. Weiterhin ist vorteilhaft, dass das Umschalten des Schwellwerts und damit die Einstellung der Empfindlichkeit im unmittelbaren Zusammenhang mit der jeweiligen Ultraschallmessung in Echtzeit und selbstständig vom Sensor realisiert werden kann. Durch Anpassung der Schwelle und Filtern der Störungen ist eine sichere Zuordnung der Nutzsignale zu einem relevanten Objekt möglich, so dass die Zuverlässigkeit der Systeme erheblich erhöht werden kann.

Der errechnete Rauschlevel kann nach jedem Messzyklus an die Auswerteeinheit übertragen werden. Dieser kann während des Nachschwingens oder nach jedem Messintervall und vor dem nächsten Sendeintervall als Bitfolge gesendet werden. Eine Bitfolge von 5 Bits ermöglicht bereits die Codierung von 31 Pegelhöhen und einem Fehlerzustand.

### Ausführungsbeispiel

In den Zeichnungen wird das erfindungsgemäße Verfahren dargestellt und unter Angabe weiterer Einzelheiten nachfolgend näher beschrieben. Es zeigen:
- **Figur 1**: einen kompletten Messzyklus,
- **Figur 2**: ein Rauschintervall innerhalb des Messzyklus,
- **Figur 3**: die Abtastung des Rauschlevels innerhalb des Rauschintervalls und
- **Figur 4**: den Zustand des Monoflopausgangs während der Abtastung.

Bekannte Echosignaldetektoren haben zwei Komparatoren, mit deren Schwellwerten sich ein Auswertefenster für die aufgenommenen Signalamplituden einstellen lässt. Im vorliegenden Fall werden die Schwellwerte der Komparatoren symmetrisch zur Nulllage des aufgenommenen Signals und damit das Auswertefenster ständig mittels eines Digital-Analog-Converters ("DAC") verändert. Dabei ist es die Funktion des Fensterkomparators, ein Signal zu liefern, sobald das Eingangssignal den Rand des Fensters überschreitet. Um ein von den Nulldurchgängen des Ultraschallträgersignals unabhängiges Ausgangssignal zu erhalten, wird jedes Einzelsignal um mindestens eine halbe Periodendauer der kleinsten zu verarbeitenden Frequenz verlängert. Diese ist hier durch den Monoflop vorgegeben, dessen Schaltzeit bei etwa 17 µs liegt.

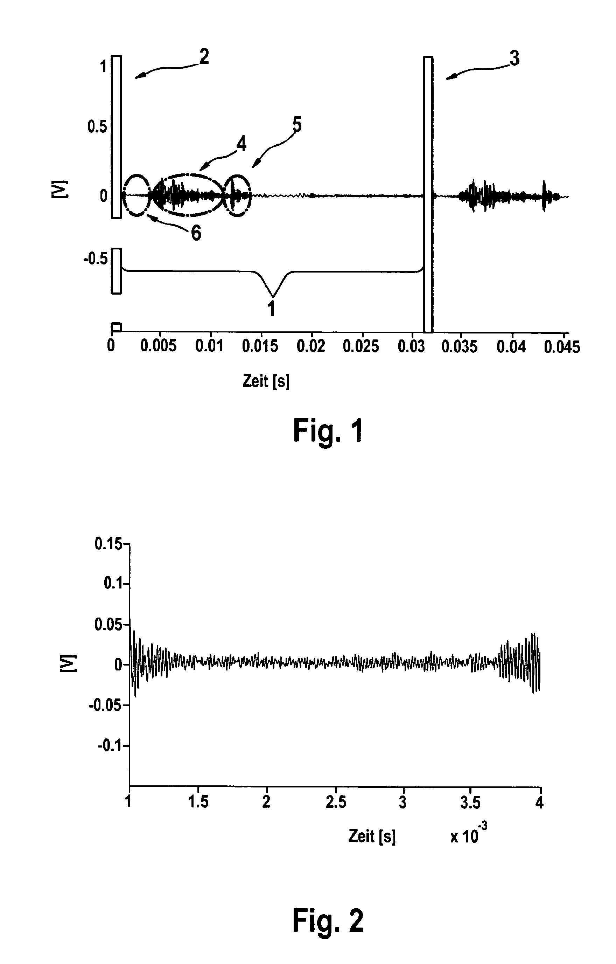

In Figur 1 ist ein Messzyklus 1 gezeigt, der von einem ersten Sendepuls 2 bis zu einem zweiten Sendepuls 3 reicht. Aufgetragen ist hier der Spannungsverlauf des empfangenen Signals in Volt gegen die Zeit in Sekunden. Das gezeigte System hat also Messzyklen von etwa 30 ms. Deutlich zu erkennen ist ein Bodenecho 4 vor einem Echo 5, das einem zu detektierenden Objekt zuzuordnen ist. Es gilt: Je länger der Messzyklus 1, desto weiter entfernt liegende Objekte können geortet werden, da vor dem nächsten Signalpuls genügend Zeit bis zum Erhalt des Echos verbleibt. Zu erkennen ist, dass sich diese Signalcharakteristik nach dem zweiten Sendepuls 3 wiederholt.

Um mittels dieser Messung eine möglichst hohe Reichweite zu erzielen, muss, da die Signalstärke des Sendepulses und des Echos mit der Entfernung abnimmt, der Schwellwert für die Komparatoren so nah wie möglich an der Rauschgrenze ("Rauschlevel") gelegt werden. Das Rauschen muss also einerseits möglichst gut andererseits aber effektiv, also ohne Anteile von Signalen abzuschneiden, ausgeblendet werden. Hochfreuquente Rauschspitzen, die die Schwellwertlinie überschreiten, können durch nachgeschaltete Elektronik herausgefiltert werden. Dabei wird als Rauschlevel der im Sensor gemessene Signalpegel verstanden, auf den kein "tatsächliches" vom Sendepuls erzeugtes Echo aufmoduliert ist. In diesem Sinne sind keine "tatsächlichen" Echos die, welche beispielsweise durch Regen oder ähnliches erzeugt werden und ein entsprechend "rauschendes" Verhalten mit geringer Amplitude aufweisen. Ein Beispiel für einen Rauschlevel ist in Figur 2 gezeigt.

Der Rauschlevel wird vorzugsweise in einem Rauschintervall zwischen 1.5 und 3.5 ms durch die Einstellung der Komparatorschwelle, die eine Sensorkennlinie bildet, bestimmt. So ist denn auch in Figur 1 zu Beginn des Messzyklus 1 ein Zeitintervall 6 von etwa 4 ms gezeigt, das als Rauschintervall 6 dient. In Figur 2 ist mit entsprechend gespreizten Achsen eine vergrößerte Darstellung des Rauschintervalls 6 aufgetragen. Zu erkennen ist die hochfrequente Charakteristik bei geringer Amplitude unter 50 mV. Innerhalb der von Echos freien Rauschprobe 6 ist nach dem Nachschwingen der Sensormembran und vor Ankunft der Bodenechos eine Abtastung des Rauschlevels möglich. In diesem Bereich haben reflektiere Echos erfahrungsgemäß eine hohe Amplitude von mehr als 200 mV und würden damit leicht als Nutzsignal identifiziert werden. Kleinere Amplituden werden dem Rauschen zugeordnet. Zur Verifizierung der ersten Messung kann zusätzlich noch ein weiteres Rauschintervall während des Messzyklus 1 entnommen werden, wobei sich der hintere Bereich anbietet.

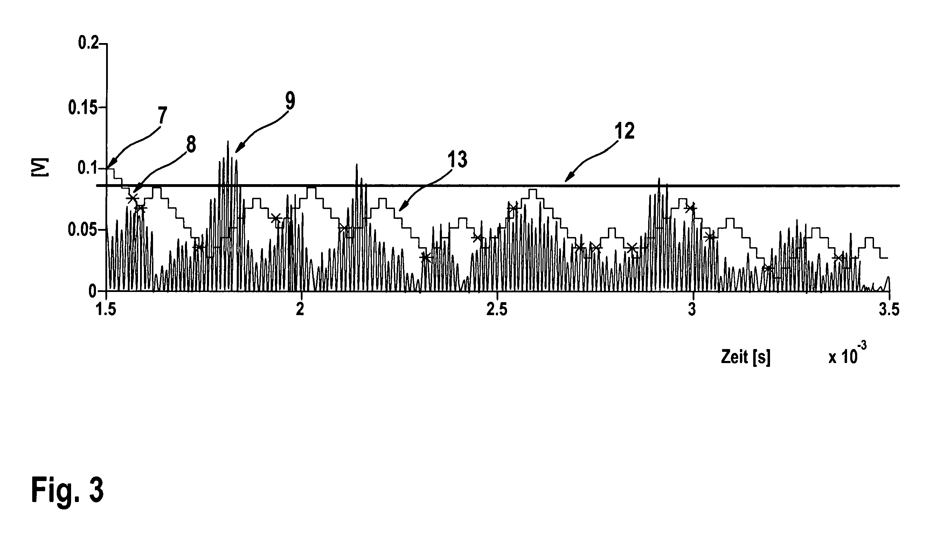

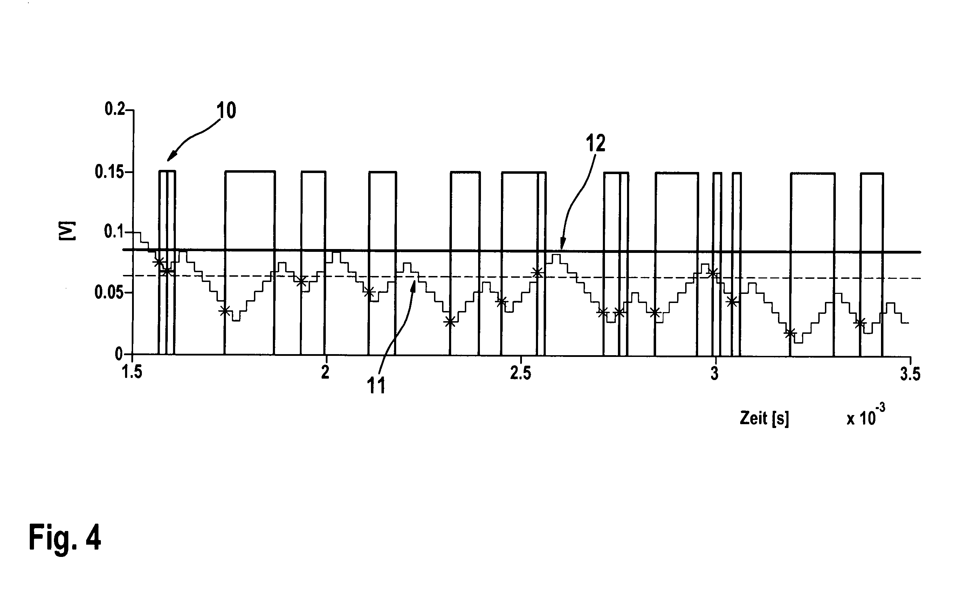

Der Rauschlevel und damit die resultierende Schwellwertkennlinie wird mit den folgenden, anhand der Figuren 3 und 4 erklärten Schritten ermittelt:

Zunächst wird der Schwellwert am Komparator mit einem Eingangswert 7 von in diesem Falle 100 mV gestartet, bevor dieser in Stufen sukzessive gesenkt wird. Die stufigen aktuellen Schwellwerte 13 werden für eine Dauer von 20 µs und damit länger als die kürzeste Dauer des Komparatorausganges und damit der geringsten Peak-Breite gehalten. Wenn die aktuell eingestellte Stufe des Schwellwertes 13 nicht von einem Peak des Rauchlevels überschritten wird, wird diese weiter gesenkt, wobei im vorliegenden Beispiel jeweils Absenkungen von 8 mV pro Schritt stattfinden. Auf diese Weise nähert sich der Schwellwert stufenweise dem Rauschlevel 9. Sobald der Schwellwert 13 das Amplitudensignal des Rauschlevels 9 unterschreitet, hier bei etwa 0,075 V am Punkt 8, wird das am Komparator registriert und der Monoflop hoch geschaltet. Das Schalten (logische Eins) ist durch die Rechtecke 10 in Figur 4 symbolisiert. Bei hoch geschaltetem Monoflop werden die einzelnen Schwellwerte 13 in einem Register gespeichert.

Die Zeitdauer, die der Komparator ein Signal liefert, wird erfasst. Damit wird eine Mindestdauer festgelegt, in der die Rauschamplitude den eingestellten Schwellwert 13 überschreitet. Übersteigt diese Zeitdauer eine vorgegebene Zeitspanne, von beispielsweise 20 µs, wird der Schwellwert 13 nicht weiter gesenkt sondern schrittweise erhöht. Die schrittweise Erhöhung des Schwellwertes 13 erfolgt so lange, bis dieser wieder über dem aktuellen Rauschen ist. Dann kehrt der Komparator respektive der Monoflop in die Ruhelage zur logischen Null zurück. Der Schwellwert 13, bei dem der Übergang erfolgte, wird ebenfalls in dem Register gespeichert. Die Dauer, in der kein Komparatorsignal anliegt, wird überwacht. Erscheint in dieser Zeit kein Signal, wird die Schwellspannung wieder schrittweise abgesenkt und der Zyklus beginnt von vorn.

Nachdem das Rauschintervall auf diese Weise abgetastet wurde, sind in dem Register alle überschrittenen Schwellwerte und die zeitlichen Längen gespeichert. An Hand dieser Werte kann der Rauschlevel, beispielsweise als Medianwert, als Mittelwert oder als der zweitgrößte gespeicherte Wert, festgelegt werden. Ein solchermaßen gemittelter Rauschlevel 11 ist in Figur 4 als unterbrochene Linie dargestellt. Anhand dieses Rauschlevels 11 kann dann die Schwellwertlinie 12 (Figuren 3 und 4) bestimmt werden. Diese kann sich aus dem ermittelten Rauschlevel 11 zuzüglich eines Offsetwert ergeben.

## Patentansprüche

1. Verfahren zur dynamischen Anpassung des Schwellwertes (12) am Signaleingang eines Sensors zur Abstandsmessung mittels eines Echoverfahrens, insbesondere mittels eines Ultraschallverfahrens, wobei ein Sendesignal (2) von dem angestrahlten Objekt in Form eines Echosignals (5) zum Sensor zurückgesandt wird, wobei der zeitliche Abstand zwischen dem Senden des Sendesignals und dem Empfang des Echosignals gemessen wird,
**dadurch gekennzeichnet,**
**dass** zwischen dem Zeitpunkt des Abklingens des Sendesignals und dem Zeitpunkt des Eintreffens des ersten Echosignals (5) ein Zeitintervall (6) für eine Rauschprobe definiert wird, dass innerhalb des Zeitintervalls (6) ein Schwellwert (13) schrittweise verändert wird, wobei das Eingangs-Rauschsignal im Verhältnis zum aktuellen Schwellwert (13) überwacht wird, wobei der aktuelle Schwellwert (13) gesenkt wird, solange das Eingangs-Rauschsignal unterhalb des aktuellen Schwellwertes liegt und wobei der aktuelle Schwellwert (13) erhöht wird, solange das Eingangs-Rauschsignal oberhalb des aktuellen Schwellwertes (13) liegt, wobei aktuelle Schwellwerte (13) innerhalb des Zeitintervalls (6) registriert werden und wobei aus den registrierten Schwellwerten (13) eine Schwellwertlinie (12) ermittelt wird.

2. Verfahren nach Anspruch 1,
**dadurch gekennzeichnet,**
**dass** der Signalausgang einer bistabilen Kippschaltung, insbesondere eines Monoflop, verändert wird, wenn sich die Richtung der veränderlichen Schwellwerte (13) ändert, wobei Schwellwerte (13) nur innerhalb eines Zustandes der Kippschaltung registriert werden.

3. Verfahren nach Anspruch 2,
**dadurch gekennzeichnet,**
**dass** der Signalausgang des Monoflop hoch gesetzt wird, wenn das Eingangs-Rauschsignal den aktuellen Schwellwert (13) übersteigt.

4. Verfahren nach einem der vorherigen Ansprüche,
**dadurch gekennzeichnet,**
**dass** der aktuelle Schwellwert (13) kontinuierlich in Sägezahnform, respektive in Form von gleichlangen Treppenstufen jeweils definierter Höhe, gesenkt respektive erhöht wird.

5. Verfahren nach einem der vorherigen Ansprüche,
**dadurch gekennzeichnet,**
**dass** das Rauschintervall (6) in einem Zeitraum zwischen 1 ms und 5 ms, insbesondere zwischen 1.5 ms und 3.5 ms, nach dem Sendetrigger (2) vorgesehen wird.

6. Verfahren nach einem der vorherigen Ansprüche,
**dadurch gekennzeichnet,**
**dass** in jedem Messzyklus eine Schwellwertlinie (12) ermittelt wird.

7. Verfahren nach einem der vorherigen Ansprüche,
**dadurch gekennzeichnet,**
**dass** in einem Register die überschrittenen aktuellen Schwellwerte (13) und die zeitlichen Längen der Überschreitungen gespeichert werden.

8. Verfahren nach Anspruch 7,
**dadurch gekennzeichnet,**
**dass** an Hand der in dem Register gespeicherten überschrittenen aktuellen Schwellwerte (13) und die zeitlichen Längen der Überschreitungen der Rauschlevel (11), beispielsweise als Medianwert, als Mittelwert oder als der zweitgrößte gespeicherter Wert, festgelegt wird.

9. Verfahren nach Anspruch 8,
**dadurch gekennzeichnet,**
**dass** anhand des Rauschlevels (11) die Schwellwertlinie (12) bestimmt wird, wobei sich diese insbesondere aus dem ermittelten Rauschlevel 11 zuzüglich eines Offsetwertes ergibt.

## Claims

1. Method for dynamically adapting the threshold value (12) to the signal input of a sensor for measuring distance by means of an echo method, in particular by means of an ultrasound method, a transmission signal (2) being transmitted back to the sensor from the illuminated object in the form of an echo signal (5), the interval of time between the transmission of the transmission signal and the reception of the echo signal being measured,
**characterized**
**in that** an interval of time (6) for a noise sample is defined between the time at which the transmission signal decays and the time at which the first echo signal (5) arrives, in that a threshold value (13) is gradually changed within the interval of time (6), the input noise signal in relation to the current threshold value (13) being monitored, the current threshold value (13) being lowered as long as the input noise signal is below the current threshold value, and the current threshold value (13) being increased as long as the input noise signal is above the current threshold value (13), current threshold values (13) being recorded within the interval of time (6) and a threshold value line (12) being determined from the recorded threshold values (13).

2. Method according to Claim 1,
**characterized**
**in that** the signal output of a bistable multivibrator, in particular a monoflop, is changed when the direction of the variable threshold values (13) changes, threshold values (13) being recorded only within a state of the multivibrator.

3. Method according to Claim 2,
**characterized**
**in that** the signal output of the monoflop is set to high when the input noise signal exceeds the current threshold value (13).

4. Method according to one of the preceding claims,
**characterized**
**in that** the current threshold value (13) is continuously lowered or increased in sawtooth form or in the form of steps of equal length and a respectively defined height.

5. Method according to one of the preceding claims,
**characterized**
**in that** the noise interval (6) is provided in a period of time between 1 ms and 5 ms, in particular between 1.5 ms and 3.5 ms, after the transmission trigger (2).

6. Method according to one of the preceding claims,
**characterized**
**in that** a threshold value line (12) is determined in each measuring cycle.

7. Method according to one of the preceding claims,
**characterized**
**in that** the current threshold values (13) which have been exceeded and the lengths of time for which said values are exceeded are stored in a register.

8. Method according to Claim 7,
**characterized**
**in that** the noise level (11) is defined, for example in the form of a median, a mean or the second largest stored value, using the current threshold values (13) which have been exceeded and are stored in the register and the lengths of time for which said values are exceeded.

9. Method according to Claim 8,
**characterized**
**in that** the threshold value line (12) is determined using the noise level (11), this threshold value line resulting, in particular, from the determined noise level (11) plus an offset value.

## Revendications

1. Procédé d'adaptation dynamique de la valeur de seuil (12) à l'entrée de signal d'une sonde de mesure de distance recourant à un procédé à écho et en particulier à un procédé à ultrasons, dans lequel l'objet irradié renvoie vers le détecteur sous la forme d'un signal d'écho (5) un signal émis (2) et l'écart temporel entre l'émission du signal émis et la réception du signal d'écho est mesuré,
**caractérisé en ce que**
un intervalle de temps (6) est défini pour un échantillon de bruit entre l'instant de la disparition du signal émis et l'instant de l'arrivée du premier signal d'écho (5),
**en ce qu'**à l'intérieur de l'intervalle de temps (6), une valeur de seuil (13) est modifiée par paliers le rapport entre la valeur de seuil (13) en cours, et le signal de bruit d'entrée étant surveillé, la valeur de seuil (13) en cours étant abaissée tant que le signal de bruit d'entrée est situé en dessous de la valeur de seuil en cours, la valeur de seuil en cours (13) étant augmentée tant que le signal de bruit d'entrée est situé au-dessus de la valeur de seuil (13) en cours, les valeurs de seuil (13) en cours à l'intérieur de l'intervalle de temps (6) étant enregistrées et une ligne (12) de valeurs de seuil étant déterminée à partir des valeurs de seuil (13) enregistrées.

2. Procédé selon la revendication 1, **caractérisé en ce que** la sortie de signal d'un circuit basculant bistable, en particulier d'un monoflop, est modifiée lorsque la direction de la valeur de seuil (13) variable se modifie, les valeurs de seuil (13) n'étant enregistrées que lorsque le circuit basculant est dans un certain état.

3. Procédé selon la revendication 2, **caractérisé en ce que** la sortie de signal du monoflop est placée à l'état haut lorsque le signal de bruit d'entrée dépasse la valeur de seuil (13) en cours.

4. Procédé selon l'une des revendications précédentes, **caractérisé en ce que** la valeur de seuil (13) en cours est abaissée ou augmentée de manière continue en forme de dents de scie ou en forme de marches d'escalier de même longueur et chacune de hauteur définie.

5. Procédé selon l'une des revendications précédentes, **caractérisé en ce que** l'intervalle de bruit (6) est prévu pendant une durée comprise entre 1 ms et 5 ms, en particulier entre 1,5 ms et 3,5 ms après la gâchette d'émission (2).

6. Procédé selon l'une des revendications précédentes, **caractérisé en ce qu'**une ligne (12) de valeurs de seuil est déterminée dans chaque cycle de mesure.

7. Procédé selon l'une des revendications précédentes, **caractérisé en ce que** les valeurs de seuil (13) en cours successives et les longueurs temporelles des superpositions sont conservées dans un registre.

8. Procédé selon la revendication 7, **caractérisé en ce que** le niveau de bruit (11) est défini par exemple sous la forme d'une valeur médiane, d'une valeur moyenne ou de la deuxième valeur enregistrée la plus grande à l'aide des valeurs de seuil (13) en cours superposées et conservées dans le registre et des longueurs temporelles des superpositions.

9. Procédé selon la revendication 8, **caractérisé en ce que** la ligne (12) de valeurs de seuil est déterminée à l'aide du niveau de bruit (11), cette ligne résultant en particulier du niveau de bruit (11) déterminé, auquel est ajoutée une valeur de décalage.
